# EUROPEAN PATENT APPLICATION

(11) **EP 1 786 154 A1**
(43) Date of publication of application: **16.05.2007**
(21) Application number: 06023475.4
(22) Date of filing: 10.11.2006
(51) Int. Cl.: H04L 12/56

(54) **Apparatus and method for transmitting/receiving forward rate control informatin in mobile communication system**

(30) Priority: 10.11.2005 KR 20050107758; 15.11.2005 KR 20050109376
(71) Applicant: Samsung Electronics Co., Ltd., Suwon-si, Gyeonggi-Do (KR)
(72) Inventor: Jung, Jung-Soo, Yeongtong-gu,Suwon-si, Gyeonggi-do (KR); Kim, Dae-Gyun, Yeongtong-gu,Suwon-si, Gyeonggi-do (KR); Bae, Beom-Sik, Yeongtong-gu,Suwon-si, Gyeonggi-do (KR)
(74) Representative: Grünecker, Kinkeldey, Stockmair & Schwanhäusser Anwaltssozietät

(57) **Abstract**

An apparatus and method for transmitting/receiving forward rate control information in a mobile communication system. The method of transmitting forward rate control information in a terminal of a mobile communication system in which an Access Node (AN) provides a sector cover corresponding to each of active sectors for the terminal and a high rate control cover, which is common to all sectors, used to direct a high data rate, includes determining a forward rate through a servicing sector at a transmission of forward rate control information; and, if the determined rate is greater than a predetermined rate, transmitting the forward rate control information through a forward rate control channel using the high rate control cover.

## Description

### BACKGROUND OF THE INVENTION

### Field of the Invention:

The present invention relates generally to an apparatus and method for transmitting/receiving control information of packet data in a mobile communication system. More particularly, the present invention relates to an apparatus and method for controlling a rate of forward packet data to be received by a terminal.

### Description of the Related Art:

Recently, a number of developments for high-speed data transmission using Code Division Multiple Access (CDMA) have been accomplished. A representative mobile communication system having a channel structure for the high-speed data transmission is a 1x Evolution Data Only (1xEVDO) system. The 1xEVDO system is a mobile communication system according to a standard suggested by 3^{rd} Generation Partnership Project 2 (3GPP2) and is an evolution of an IS-2000 system with enhanced data communication capabilities being added.

The 1xEVDO system can be divided into a forward channel and a reverse channel. A configuration of the forward channel will now be described first.

The forward channel is transmitted by time division multiplexing a forward pilot channel, a forward Medium Access Control (MAC) channel, a forward traffic channel, and a forward control channel. Here, a bundle of time division multiplexed signals is called a burst.

The forward traffic channel is a channel for transmitting user packet data. The forward control channel can transmit a control message and may transmit user packet data. The forward MAC channel is used to control a reverse rate and transmit power control information or is a channel assigned to forward data transmission.

A configuration of the reverse channel of the 1xEVDO system will now be described. Unlike the forward channel, the reverse channel has a different identification code per terminal. Thus, each terminal has a different reverse channel. The reverse channel per terminal consists of a pilot channel, a reverse traffic channel, an access channel, a forward Data Rate Control (DRC) channel, and a Reverse Rate Indicator (RRI) channel.

The reverse traffic channel carries user packet data therein. The DRC channel is used to direct a forward rate which a terminal can support, and the RRI channel is used to direct a rate of a data channel transmitted in a reverse direction. The access channel is used for a terminal to transmit a message or traffic to an Access Node (AN) before the traffic channel is connected.

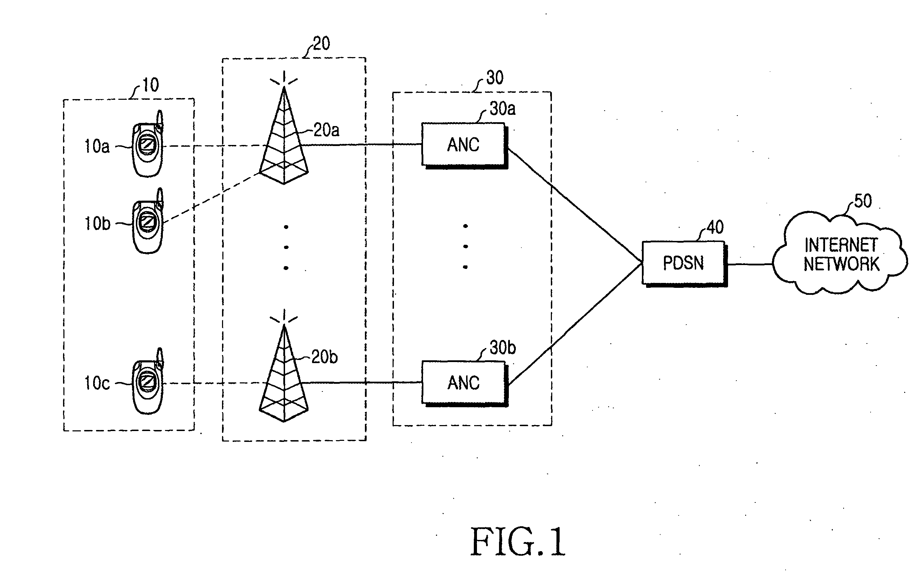

A structure of the 1xEVDO system, a rate control operation, and related channels will now be described with reference to FIG 1.

Referring to FIG 1, the 1xEVDO system includes a Packet Data Service Node (PDSN) 40, which is connected to an Internet network 50 and transmits fast-packet data to ANs 20, and Access Node Controls (ANCs) 30 for respectively controlling the ANs 20. The ANs 20 communicate with a plurality of terminals 10 in a wireless manner and transmit the fast-packet data to a specific terminal. An exemplary ANCs 30 includes AN 30a and 30b. An exemplary ANs 20 includes AN 20a and 20b. An exemplary plurality of terminals 10 includes terminal 10a, 10b and 10c.

For rate control of a forward channel, each of the terminals 10 measures the reception intensity of a pilot transmitted by each of the ANs 20 and determines a forward rate at which each of the terminals 10 desires to receive forward data, based on the measured pilot reception intensity. The terminals 10 transmit DRC information corresponding to the determined forward rates to the relevant ANs 20 via a DRC channel. One of the ANs 20, which has received the DRC information from connected terminals 10, may first transmit packet data to the specific terminal 10a having a better channel state than the others at a data rate reported by the specific terminal 10a.

When transmitting the DRC information via the DRC channel, each terminal 10 multiplies the DRC information by a 3-bit sector cover and transmits the multiplication result. The sector cover is an identifier indicating a sector by which the terminal 10 desires to receive data at the data rate corresponding to the DRC information, and a unique value of the sector cover is assigned to all sectors in the terminal's active set. The active set is a set of ANs or sectors of which the intensity of a received pilot is greater than a predetermined value. In general, since most ANs are sector-type ANs, a sector-type AN will be described as an example.

In general, when a terminal transmits DRC information, the terminal multiplies the DRC information by a sector cover of a sector having the best forward channel state (hereinafter, this sector is called "serving sector") and transmits the multiplication result. In this case, a handoff situation in which the serving sector is changed due to movement of the terminal may occur. The terminal performing a handoff may perform a handoff process using the sector cover of the previous servicing sector and a sector cover of a new servicing sector according to a pre-defined pattern or protocol. Here, the previous servicing sector is a source servicing sector, and the new servicing sector is a target servicing sector.

Although the DRC information can be updated in every slot according to a channel state, the same DRC information can be repeatedly transmitted during 2 slots, 4 slots, or 8 slots when specifically set. The DRC information transmitted over several slots requires lower transmission power according to an increase in the number of slots.

An exemplary relationship between a DRC value reported by a terminal in a 1xEVDO system and a data rate and a transmission format related to the DRC value will now be described with reference to Table 1.

**[Table 1]**

| DRC | Data rate (Kbps) | Number of slots | Transmission format |
|---|---|---|---|
| 0x0 | 0 | 16 | (1024, 16, 1024) |
| 0x1 | 38.4 | 16 | (1024, 16, 1024) |
| 0x2 | 76.8 | 8 | (1024, 8, 512) |
| 0x3 | 153.6 | 4 | (1024, 4, 256) |
| 0x4 | 307.2 | 2 | (1024, 2, 128) |
| 0x5 | 307.2 | 4 | (2048, 4, 128) |
| 0x6 | 614.4 | 1 | (1024, 1, 64) |
| 0x7 | 614.4 | 2 | (2048, 2, 64) |
| 0x8 | 921.6 | 2 | (3072, 2, 64) |
| 0x9 | 1228.8 | 1 | (2048, 1, 64) |
| 0xa | 1228.8 | 2 | (4096, 2, 64) |
| 0xb | 1843.2 | 1 | (3072, 1, 64) |
| 0xc | 2457.6 | 1 | (4096, 1, 64) |
| 0xd | 1536 | 2 | (5120, 2, 64) |
| 0xe | 3072 | 1 | (5120, 1, 64) |

As shown in Table 1, the transmission format is represented in the form of (A, B, C), where A denotes the number of bits of transmitted information, B denotes the number of slots through which the information is transmitted, and C denotes the number of chips corresponding to the length of a preamble transmitted prior to the transmission format. Thus, a value (1024, 16, 1024) of a first field in Table 1 means that 1024-bit information following a 1024-chip preamble is transmitted during 16 slots.

As shown in Table 1, if each terminal reports a DRC value to an AN, the AN transmits data to each terminal in a transmission format corresponding to the DRC value reported by each terminal. Each terminal receives a forward data channel in only the transmission format corresponding to the DRC value reported by itself. This regulation is established since there is not any other channel for directing a terminal's rate of a forward data channel. That is, if the AN transmits data using any transmission format different from a transmission format reported by a certain terminal, there is no way to direct the different transmission format, and thus the certain terminal cannot receive the data. Thus, the AN always transmits data in only a transmission format corresponding (compatible) to DRC information reported by each terminal. For example, to a terminal, which has transmitted DRC 0x0 through the DRC channel, the AN transmits data in a transmission format according to (1024, 16, 1024) corresponding to the DRC value. Of course, the terminal receives the data in only the transmission format.

When an AN transmits data to a terminal, the AN directs which user must receive forward data, using a preamble having a length corresponding to a transmission format to be used. The preamble is obtained by spreading a pre-defined bit sequence using a Walsh code corresponding to a MAC identifier (MAC ID) assigned to each terminal by the AN. In order to determine whether to receive the data, a terminal receives chips of a preamble length corresponding to a transmission format reported by it, de-spreads the preamble using a Walsh code corresponding to its own MAC ID, compares whether a signal strength and a value obtained as the de-spreading result is the same as a pre-defined bit sequence, and determines according to the comparison result whether a destination of the data is itself.

For 1xEVDO systems, developments in providing a higher data rate by incorporating new wireless technologies are ongoing. Thus, it is predicted that a higher data rate than that achieved using conventional techniques will be supported.

As described above, the DRC information has only 15 transmission formats illustrated in Table 1. That is, since a reverse rate control channel uses 4-bit information, up to 16 data rates can be directed. In other words, one more than the number of currently provided data rates can be provided. However, in order to provide more data rates, the number of bits must be extended.

However, if the number of bits is extended, a problem of compatibility with conventional systems may occur, reverse transmission may have a problem due to a reverse overhead, and a reverse bandwidth may be limited.

Accordingly, there is a need for an improved apparatus method and for extending forward rate control information in a mobile communication system.

### SUMMARY OF THE INVENTION

Exemplary embodiments of the present invention address at least the above problems and/or disadvantages and provide at least the advantages described below. Accordingly, an aspect of an exemplary embodiment of the present invention is to provide an apparatus and method for extending forward rate control information in a mobile communication system.

Another aspect of an exemplary embodiment of the present invention is to provide an apparatus and method for preventing an increase of overhead while extending forward rate control information.

According to one aspect of an exemplary embodiment of the present invention, there is provided an apparatus for transmitting forward rate control information in a terminal of a mobile communication system in which an Access Node (AN) provides a sector cover corresponding to each of active sectors for the terminal and a high rate control cover, which is common to all sectors, used to direct a high data rate. The apparatus comprising a controller for determining a forward rate to be requested to the AN at a transmission time of the forward rate control information, determining whether the determined forward rate is greater than a predetermined data rate, performing control to use the high rate control cover if it is determined that the determined rate is greater than the predetermined data rate, and performing control to use the sector cover if it is determined that the determined rate is equal to or less than the predetermined data rate; and a transmitter for transmitting the determined data rate value using one of the high rate control cover and sector cover.

According to another aspect of an exemplary embodiment of the present invention, there is provided a method of transmitting forward rate control information in a terminal of a mobile communication system in which an Access Node (AN) provides a sector cover corresponding to each of active sectors for the terminal and a high rate control cover, which is common to all sectors, used to direct a high data rate. The method comprising determining a forward rate through a servicing sector at a transmission time of forward rate control information; and if the determined forward rate is greater than a predetermined rate, transmitting the forward rate control information through a forward rate control channel using the high rate control cover.

According to another aspect of an exemplary embodiment of the present invention, there is provided a method of receiving forward rate control information in an Access Node (AN) of a mobile communication system having ANs, which determine a forward rate by receiving the forward rate control information from a terminal and transmit forward traffic at the determined forward rate. The method comprising determining whether rate control information received from the terminal at a transmission time of forward rate control information is detected using a sector cover; if it is determined that the rate control information is detected using the sector cover, determining forward rate control information from a first data rate table; if it is determined that the rate control information is not detected using the sector cover, detecting the rate control information using a common cover; and if the rate control information is detected using the common cover, determining a data rate from a second rate table.

According to another aspect of an exemplary embodiment of the present invention, there is provided an apparatus for receiving forward rate control information in an Access Node (AN) of a mobile communication system having ANs, which determine a forward rate by receiving the forward rate control information from a terminal and transmit forward traffic at the determined forward rate. The apparatus comprising a Radio Frequency (RF) module for receiving forward rate control information; and a controller for determining whether rate control information received from the terminal at a reception time of the forward rate control information is detected using a sector cover and detecting the rate control information using a common cover if it is determined that the rate control information is not detected using the sector cover.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain embodiments of the present invention will be more apparent from the following description taken in conjunction with the accompanying drawings, in which:
FIG 1 is a conceptual diagram for describing a structure of a 1xEVDO system, a data rate control operation, and related channels;
FIG 2 is a block diagram illustrating a basic configuration for communication between an AN and a terminal according to a preferred exemplary embodiment of the present invention;
FIG 3 is a flowchart illustrating a method of transmitting DRC in a terminal according to a preferred exemplary embodiment of the present invention;
FIG 4 is a flowchart illustrating a method of receiving DRC in an AN according to a preferred exemplary embodiment of the present invention;
FIG 5 is a flowchart illustrating a method of transmitting DRC in a terminal according to another preferred exemplary embodiment of the present invention; and
FIG 6 is a flowchart illustrating a method of receiving DRC in an AN according to another preferred exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness...

One application of new wireless technology to a conventional 1xEVDO system will now be described. In the conventional 1xEVDO system, a 64 Quadrature Amplitude Modulation (64-QAM) modulation/demodulation scheme cannot be used as a modulation/demodulation scheme. If the 64-QAM modulation/demodulation scheme is applied to the conventional 1xEVDO system, Access Nodes (ANs) and terminals can support a peak data rate of a maximum of more than 4 Mbps, which exceeds a conventional peak data rate of 3 Mbps. If the peak data rate increases in this sense, the terminals and ANs must define new transmission formats corresponding to the peak data rate. If the number of new transmission formats increases, the number of pieces of rate control information (hereinafter, DRC) directing them must increase.

As described in the prior art, since the conventional 1xEVDO system transmits 4-bit DRC, the conventional 1xEVDO system can represent a maximum of 16 pieces of data rate information. However, since 15 transmission formats already exist, a method of directing more data rate information is required in order to support the new transmission formats.

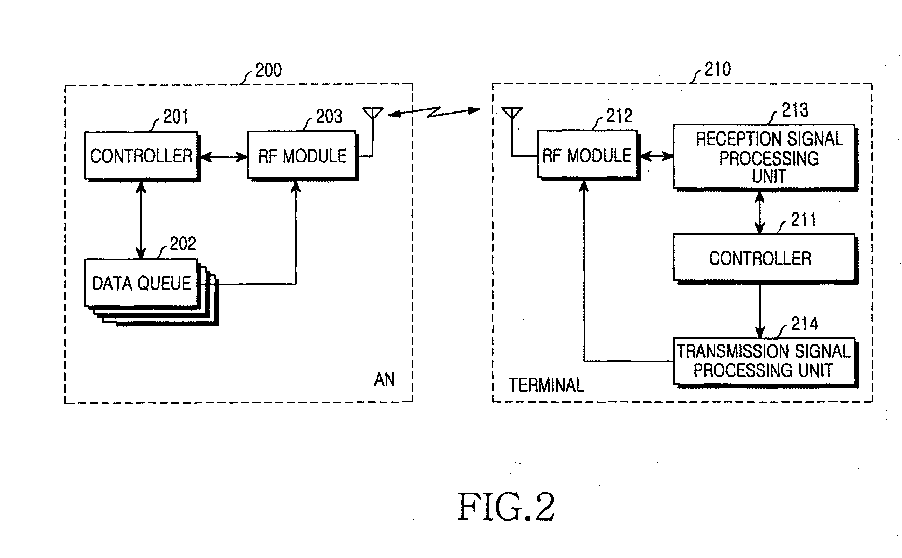

FIG 2 is a block diagram illustrating a basic configuration for communication between an AN 200 and a terminal 210 according to a preferred exemplary embodiment of the present invention. A configuration and operation of the AN 200 will now be described first.

Referring to FIG 2, it is assumed that the AN 200 is a sector AN. However, the exemplary embodiment of the present invention can also be applied to an omnidirectional AN (omni-AN).

It is also assumed that the AN 200 is a 3-sector AN. Each sector of the AN 200, which belongs to an active set of the terminal 220, has a different 3-bit sector cover for distinguishing between the 3 sectors. According to the current exemplary embodiment, each of the 3 sectors also has a 3-bit high rate cover globally used in the single AN 200 and directs newly added transmission formats using the high rate cover. That is, besides an existing DRC table, a new data rate table is defined for the high rate cover. The newly defined data rate table is called "high rate DRC table" hereinafter. An exemplary high rate DRC table is illustrated in Table 2.

**[Table 2]**

| DRC | Data rate (Kbps) | Number of slots | Transmission format |
|---|---|---|---|
| 0x0 | 460.0 | 4 | (3072, 4, 64) |
| 0x1 | 614.4 | 4 | (4096, 4, 64) |
| 0x2 | 768.0 | 4 | (5120, 8, 512) |
| 0x3 | 921.6 | 4 | (6144, 4, 64) |
| 0x4 | 1075.2 | 4 | (7168, 4, 64) |
| 0x5 | 1228.8 | 4 | (8192, 4, 64) |
| 0x6 | 1843.2 | 2 | (6144, 2, 64) |
| 0x7 | 2150.4 | 2 | (7168, 2, 64) |
| 0x8 | 2457.6 | 2 | (8129, 2, 64) |
| 0x9 | 3686.4 | 1 | (6144, 1, 64) |
| 0xa | 4300.8 | 1 | (7168, 1, 64) |
| 0xb | 4915.2 | 1 | (8192, 1, 64) |

Table 2 is also represented in the form of (A, B, C) as described with reference to Table 1 above, where A, B, and C respectively have the same meaning as the description with reference to Table 1 above.

The AN 200 includes a controller 201, a Radio Frequency (RF) module 203, and a data queue 202. The controller 201 controls a general control and scheduling operation. That is, the controller 201 includes a scheduler (not shown). The data queue 202 can be implemented using a memory temporarily storing data to be transmitted to the terminal 210. The RF module 203 processes RF signals transmitted/received to/from the terminal 210 over air.

The controller 201 has the DRC table as exemplified in Table 1 according to the conventional art and the high rate DRC table exemplified in Table 2 according to a preferred exemplary embodiment of the present invention. The DRC table can be stored in a separate memory (not shown). The controller 201 assigns a sector cover of each of the sectors of the AN 200 to the terminal 210 having an active set containing which the sectors. The terminal 210 stores the assigned sector cover in a memory (not shown) thereof considering the sectors belonging to the active set. The controller 201 additionally assigns the high rate cover to be globally used for the sectors to the terminal 210. The controller 201 controls the RF module 203 to receive DRC transmitted from the terminal 210 using the sector cover and the high rate cover assigned to the terminal 210 and analyzes the DRC value as a different transmission format according to a cover type. For example, if the terminal 210 transmits DRC using a general sector cover, the controller 201 reads a value of the DRC table illustrated in Table 1, and if the terminal 210 transmits DRC using the high rate cover according to a preferred exemplary embodiment of the present invention, the controller 201 analyzes a transmission format based on the high rate DRC table exemplified in Table 2. Alternatively, a single DRC table can be defined by dividing the entire DRC table into a portion of the DRC table for DRC transmitted using a sector cover and another portion of the DRC table for DRC transmitted using the high rate cover. That is, the DRC table exemplified in Table 1 and the high rate DRC table exemplified in Table 2 are combined into a single DRC table in which a specific portion is analyzed for DRC transmitted using a sector cover and the other portion is analyzed for DRC transmitted using the high rate cover. It can be understood that the latter is the same as the former except that the two tables are combined into one. This analysis is for compatibility with conventional systems. However, if the compatibility is not required, the rule applied to the sector cover may be changed. Here, for convenience of description, only a case of the compatibility with conventional systems will be considered.

Since the high rate cover can be distinguished from a sector cover when a receiver, i.e., the AN 200, receives a rate control channel, a value of the 3-bit sector cover can be used as a reserved value. For example, the AN 200 can assign a value of 7 among values 0 to 7 of the sector cover, which can express 8 values with 3 bits, to the high rate cover and assign the remaining values 0 to 6 to the sector cover.

If the AN 200 is a non-servicing AN belonging to the active set of the terminal 210, the controller 201 controls the RF module 203 to receive DRC from the terminal 210 using only a sector cover of each sector of the AN 200.

A configuration and operation of the terminal 210 will now be described.

In FIG 2, only the blocks of the terminal 210 for wireless communication are shown. The terminal 210 includes a controller 211, an RF module 212, a reception signal processing unit 213, and a transmission signal processing unit 214. The controller 211 controls a general operation of the terminal 210. The RF module 212 processes RF signals transmitted/received over air. The reception signal processing unit 213 demodulates and decodes a received signal. The transmission signal processing unit 214 encodes and modulates a signal to be transmitted.

In a method suggested in a preferred exemplary embodiment of the present invention, to the terminal 210, each sector belonging to the active set of the terminal 210 assigns a different sector cover. That is, the controller 211 controls the RF module 212 and the reception signal processing unit 213 to receive sector covers for distinguishing each sector from the AN 200 and stores the received sector covers. The controller 211 also receives a high rate cover assigned to the terminal 210 to be used in a servicing sector among the sectors of the AN 200. Information on the assigned high rate cover and sector covers is stored in the memory of the terminal 210. The high rate cover is used to replace a sector cover in order to use new transmission formats, e.g., newly defined transmission formats, different from transmission formats of a sector cover of a current servicing sector, and is multiplied by the rate control channel and is transmitted in addition to the sector cover. In this case, the high rate cover can be used by reserving the value of 7 among the values 0 to 7 of the sector cover, which can express 8 values with 3 bits, as described with reference to the AN 200.

A general operation between the AN 200 and the terminal 210 will now be described in more detail.

It is assumed that the new transmission formats identified by the high rate cover, which are exemplified in Table 2, are added to the basic transmission formats identified by the sector cover, which are exemplified in Table 1 with reference to the conventional art. It is also assumed that the active set of the terminal 210 includes sectors A, B, and C where the sector A is a servicing sector. The AN 200 assigns sector covers cover_a, cover_b, and cover_c corresponding to the sectors A, B, and C to the terminal 210 and additionally assigns the high rate cover cover_hi to the terminal 210.

If a DRC value is a value belonging to the Table 1 described in the prior art while the terminal 210 communicates with the AN 200 in the servicing sector A, the terminal 210 transmits data rate information to the AN 200 using the sector cover cover_a, and if a DRC value corresponds to a transmission format of Table 2 that is newly defined according to a preferred exemplary embodiment of the present invention, the terminal 210 transmits data rate information to the AN 200 using the high rate cover cover_hi.

The sector A that is the servicing sector of the terminal 210 must analyzes a rate control channel transmitted from the terminal 210 using the sector cover cover_a and the high rate cover cover_hi. The sectors B and C, which are non-servicing sectors, analyzes the rate control channel transmitted from the terminal 210 using the sector covers cover_b and cover_c, respectively, in order to prepare a handoff of the terminal 210.

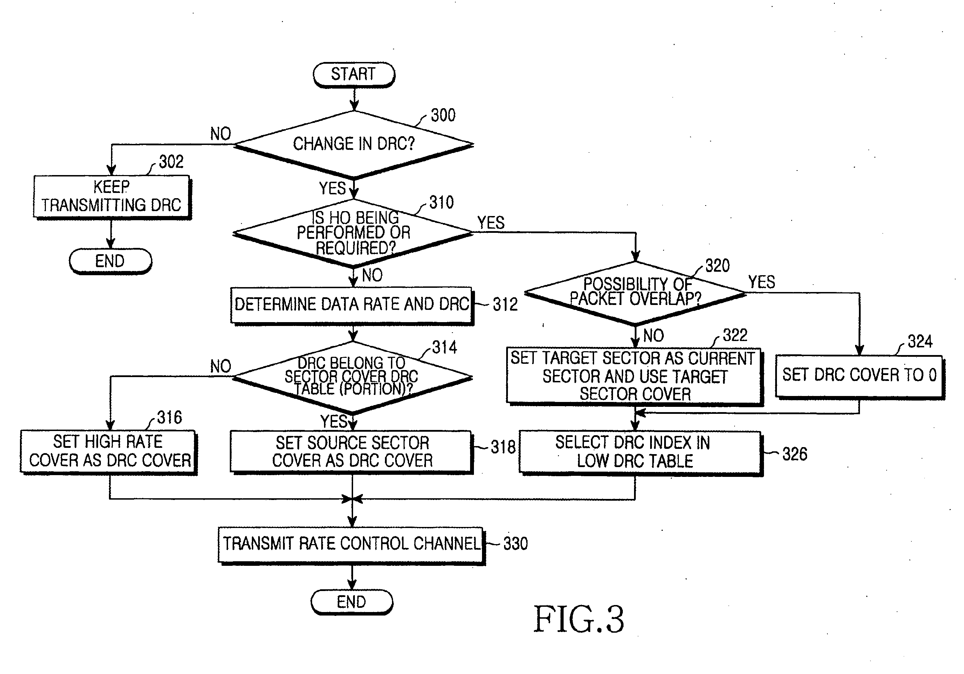

FIG 3 is a flowchart illustrating a method of transmitting DRC in the terminal 210 according to a preferred exemplary embodiment of the present invention.

The terminal 210 must perform the process of FIG 3 in every slot *t*. Thus, FIG 3 illustrates a process performed by the terminal 210 in every slot *t*.

Referring to FIG 3, as described previously, since DRC is transmitted during 2, 4, or 8 slots, a slot *t* may not be related to a transmission of new DRC. Thus, the controller 211 determines in step 300 whether a current slot corresponds to a change of DRC. If it is determined in step 300 that the current slot does not correspond to the DRC change, the controller 211 keeps transmitting previous DRC in step 302 and ends control for the current slot.

If it is determined in step 300 that the current slot corresponds to the DRC change, the controller 211 determines in step 310 whether a handoff (HO) from a current servicing sector to another sector is being performed or required. This can be determined based on the intensity of a pilot channel per sector accumulatively measured for a specific time. If it is determined in step 310 that the handoff is not being performed or is required, the controller 211 determines a service data rate and its corresponding DRC value by measuring the pilot intensity of the current servicing sector in step 312. The controller 211 determines in step 314 whether the selected DRC value belongs to a DRC table using a sector cover or the high rate DRC table. Alternatively, the controller 211 may determines in step 314 whether the selected DRC value belongs to a sector cover portion or high rate cover portion of a combined DRC table.

If it is determined in step 314 that the selected DRC value (i.e., the selected data rate) belongs to the sector cover DRC table (or sector cover portion), the controller 211 reads a corresponding DRC value from the DRC table exemplified in Table 1 with reference to the conventional art and determines in step 318 that transmission is performed using the sector cover. The controller 211 transmits the DRC value through a rate control channel in step 330.

If it is determined in step 314 that the selected data rate does not belong to the sector cover DRC table or the sector cover portion, the controller 211 selects the high rate cover as a DRC cover in step 316 and reads a corresponding DRC value. The controller 211 transmits the selected DRC value through a rate control channel using the selected cover in step 330.

If it is determined in step 310 that the handoff is being performed or is required, the controller 211 determines in step 320 whether a packet transmitted from a target sector and a packet transmitted from a source sector is or can be simultaneously transmitted if the handoff is immediately performed at the current slot. That is, it is determined whether packets transmitted from more than two ANs overlap each other or could overlap each other.

If it is determined in step 320 that there exists the possibility of overlapping packet transmission, the controller 211 sets the DRC cover to a value corresponding to a null (0) cover in step 324. The null (0) cover is a specifically prepared value among values of the 3-bit DRC cover, and it is defined that every AN, which has received the null cover, does not transmit new data to a terminal, which has transmitted the null cover, as long as the terminal transmits the null cover. The controller 211 proceeds to select a DRC index in a low DRC table in step 326.

If it is determined in step 320 that there does not exist overlapping packet transmission or the possibility of overlapping packet transmission, the controller 211 changes the current servicing sector to a target sector and sets the DRC cover to a sector cover of the target sector in step 322. The controller 211 selects a DRC value from a sector cover DRC table or a sector cover portion in step 326 and transmits the selected DRC value through the rate control channel using the set DRC cover in step 330.

An operation of the AN 200 will now be described.

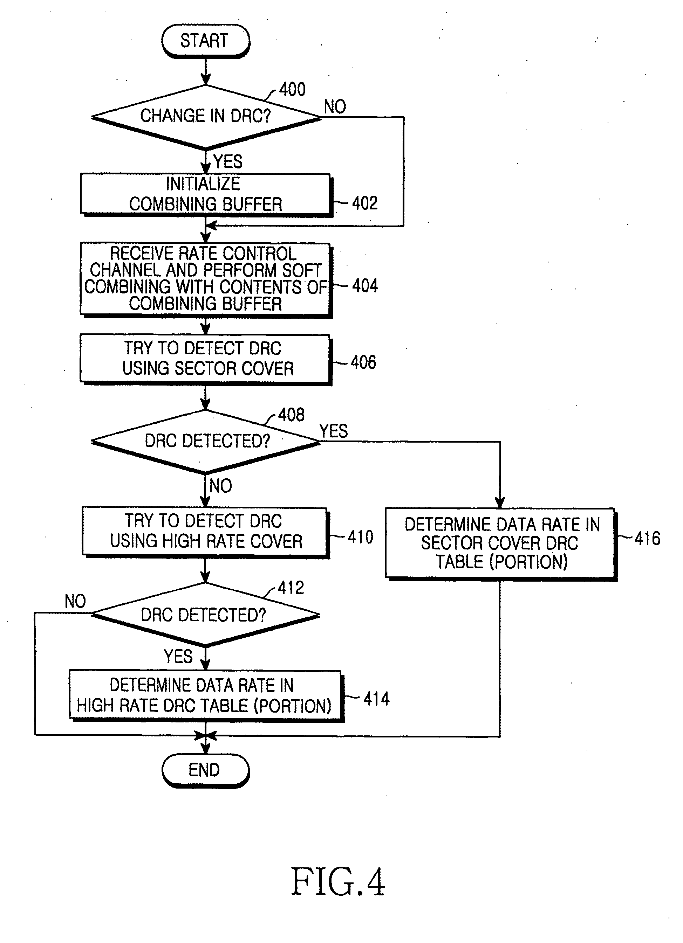

FIG 4 is a flowchart illustrating a method of receiving DRC in a servicing sector of the AN 200 according to a preferred exemplary embodiment of the present invention.

Referring to FIG 4, as described above, the controller 201 of the AN 200 must perform the process of FIG 4 in every slot for a specific terminal. In addition, since DRC may be transmitted during a plurality of slots according to a setting, the AN 200 must perform soft combining until DRC transmitted during a plurality of slots is completely received. Thus, the controller 201 determines in step 400 whether a current slot corresponds to a reception of new DRC. If it is determined in step 400 that the current slot corresponds to the reception of new DRC, the controller 201 initializes a soft combining buffer storing previously received content in step 402 and proceeds to step 404. If it is determined in step 400 that the current slot does not correspond to the reception of new DRC, the controller 201 receives a rate control channel transmitted from a terminal and performs soft combining between the received signal and a signal stored in the soft combining buffer in step 404, and tries to detect transmitted DRC information using a sector cover in step 406. Here, if new DRC has been received from the terminal due to the DRC change, since the soft combining buffer has been initialized in step 402, only the control channel is received from the terminal in step 404.

The controller 201 determines in step 408 whether DRC has been detected using the sector cover. If it is determined in step 408 that the DRC has been detected using the sector cover, it is determined that a data rate value has been detected from Table 1. Thus, the controller 201 determines a data rate according to the received DRC from the sector cover DRC table (or portion) in step 416.

If it is determined in step 408 that the DRC has not been detected using the sector cover, the controller 201 tries to detect the transmitted DRC information using a high rate cover in step 410. The controller 201 determines in step 412 whether the DRC has been detected. If it is determined in step 412 that the DRC has been detected, the controller 201 detects, in step 414, a transmission format requested by the terminal by searching for the DRC value from the high rate DRC table exemplified in Table 2 or from a high data rate portion in the case where the two tables are combined to a single table and ends this process. If it is determined in step 412 that the DRC has not been detected using the high rate cover, the controller 201 ends the DRC receiving process of the current slot.

A case where a high-speed data service is provided in a state in which a handoff is completed will now be described.

In the operation of transmitting/receiving DRC information, if the DRC information transmitted from the terminal 210 is lost in the handoff process, the terminal 210 retransmits DRC using the high rate cover to the AN 200. In this case, since the DRC does not have information on a servicing sector, the AN 200 cannot determine which sector is used to transmit data. This is because since the AN 200 uses the high rate cover for all sectors as described above, the AN 200 cannot know which sector the terminal 210, which has completed the handoff, belongs to. Thus, if data transmission is requested using the high rate cover by the terminal 210 after the handoff is performed, the exemplary embodiment described in FIG 4 cannot be applied as it is. Thus, in another preferred exemplary embodiment of the present invention, a process for overcoming this problem will be described. A process performed by the terminal 210 according to another preferred exemplary embodiment of the present invention will now be described.

In another preferred exemplary embodiment of the present invention, the method described below is suggested. That is, after a handoff is performed, the controller 211 transmits DRC using only a sector cover until the terminal 210 receives at least one packet corresponding to the sector cover DRC table from the AN 200. After a packet corresponding to the sector cover DRC table is received, the terminal 210 uses both the sector cover and the high rate cover. Thus, in the exemplary embodiment described in FIG 4, after the terminal 210 performs a handoff, the controller 201 checks the DRC transmitted from the terminal 210 using only the sector cover until the AN 200 transmits at least one packet corresponding to the sector cover DRC table to the terminal 210. After a packet corresponding to the sector cover DRC table is transmitted, the controller 201 checks DRC using both the sector cover and the high rate cover. Although one packet is used as an exemplary embodiment, if necessary, it can be configured to use the high rate cover only after two or more packets are transmitted/received. If the high rate cover is used only after two or more packets are transmitted/received, this can be achieved by modifying the exemplary embodiments described below. Thus, only a case where a single packet is transmitted/received is illustrated.

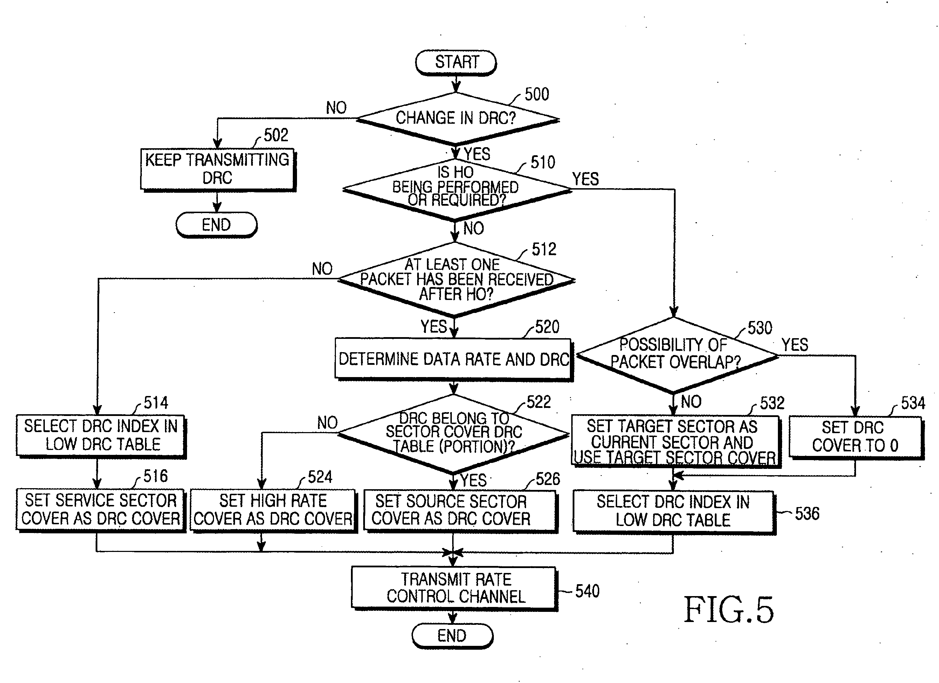

FIG 5 is a flowchart illustrating a method of transmitting DRC in the terminal 210 according to another preferred exemplary embodiment of the present invention.

The terminal 210 must perform the process of FIG 5 in every slot *t.* Thus, FIG 5 illustrates a process performed by the terminal 210 in every slot *t*.

Referring to FIG 5, as described previously, since DRC can be transmitted in every slot or during 2, 4, or 8 slots when specifically set, a slot *t* may not be related to a transmission of new DRC. Thus, the controller 211 determines in step 500 whether a current slot corresponds to a DRC change. If it is determined in step 500 that the current slot does not correspond to the DRC change, the controller 211 keeps transmitting previous DRC in step 502 and ends control for the current slot.

If it is determined in step 500 that the current slot corresponds to the DRC change, the controller 211 determines in step 510 whether a handoff from a current servicing sector to another sector is performed or required. This can be determined based on the intensity of a pilot channel per sector accumulatively measured for a specific time. If it is determined in step 510 that the handoff is not performed or required, the controller 211 determines in step 512 whether the current servicing sector has received at least one packet. If it is determined in step 512 that the terminal 210 has not received any one packet from the current servicing sector, the controller 211 measures the pilot intensity of the current servicing sector and determines an adequate data rate and its corresponding DRC value from the sector cover DRC table exemplified in Table 1 in step 514. The controller 211 selects a sector cover corresponding to the current servicing sector as a DRC cover in step 516. That is, since the terminal 210 has not received any packets from the current servicing sector, the terminal 210 uses the sector cover as the DRC cover according to the current exemplary embodiment. The controller 211 transmits the selected DRC value through a rate control channel using the selected cover in step 540.

If it is determined in step 512 that the terminal 210 has received at least one packet from the current servicing sector, the controller 211 selects a service data rate belonging to the sector cover DRC table (or portion) or the high rate DRC table (or portion) by measuring the pilot intensity of the current servicing sector and determines a DRC value corresponding to the selected data rate in step 520. The controller 211 determines in step 522 whether the selected DRC value belongs to a DRC table (or portion) using a sector cover or the high rate DRC table (or portion).

If it is determined in step 522 that the selected data rate belongs to the sector cover DRC table (or sector cover portion), the controller 211 reads a corresponding DRC value from the DRC table exemplified in Table 1 as described with reference to the conventional art in step 526 and determines that transmission is performed using the sector cover. The controller 211 transmits the selected DRC value through the rate control channel using the selected cover in step 540.

If it is determined in step 522 that the selected DRC value (i.e., the selected data rate) does not belong to the sector cover DRC table or the sector cover portion, the controller 211 selects the high rate cover as a DRC cover in step 524 and reads a corresponding DRC value. The controller 211 transmits the selected DRC value through the rate control channel using the selected cover in step 540.

If it is determined in step 510 that the handoff is being performed or is required, the controller 211 determines in step 530 whether a packet transmitted from a target sector and a packet transmitted from a source sector is or can be simultaneously transmitted if the handoff is immediately performed at the current slot. That is, it is determined whether packets transmitted from more than two ANs overlap each other or could overlap each other.

If it is determined in step 530 that there exists overlapping packet transmission or the possibility of overlapping packet transmission, the controller 211 sets the DRC cover to a value corresponding to a null (0) cover in step 534. The null (0) cover is a specifically prepared value among values of the 3-bit DRC cover, and it is defined that every AN, which has received the null cover, does not transmit new data to a terminal, which has transmitted the null cover, as long as the terminal transmits the null cover. The controller 211 proceeds to select a DRC index in a low DRC table in step 536.

If it is determined in step 530 that there does not exist overlapping packet transmission or the possibility of overlapping packet transmission, the controller 211 changes the current servicing sector to a target sector and sets the DRC cover to a sector cover of the target sector in step 532. The controller 211 selects a DRC value from a sector cover DRC table or a sector cover portion in step 536 and transmits the selected DRC value through the rate control channel using the selected cover in step 540.

An operation of the AN 200 responding to the above process will now be described.

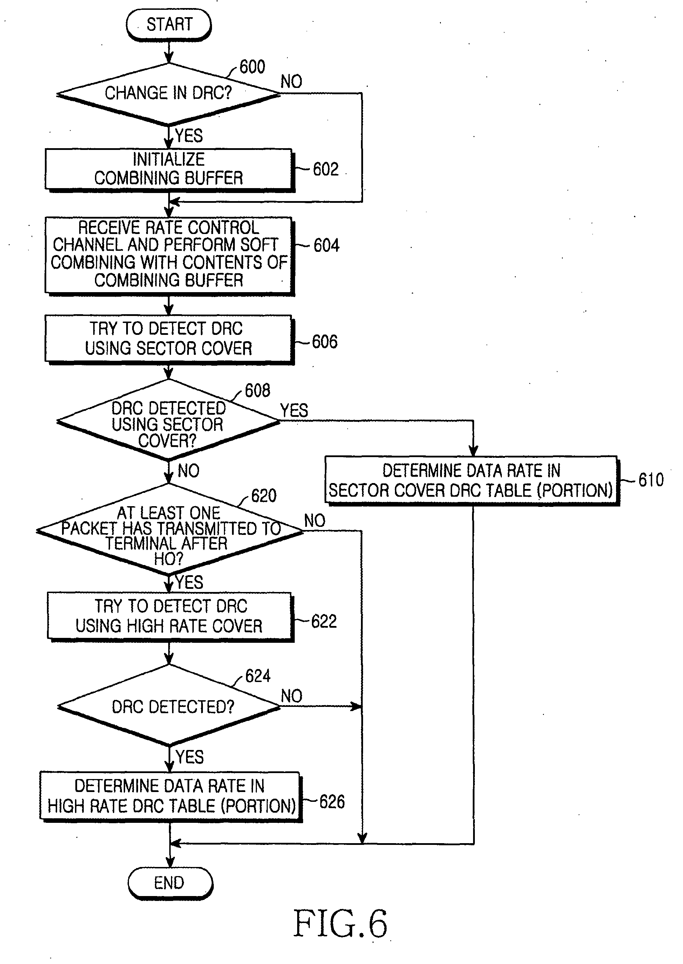

FIG 6 is a flowchart illustrating a method of receiving DRC in a servicing sector of the AN 200 according to another preferred exemplary embodiment of the present invention.

Referring to FIG 6, as described above, the controller 201 of the AN 200 must perform the process of FIG 6 in every slot for a specific terminal. In addition, since DRC may be transmitted during a plurality of slots according to a setting, the AN 200 must perform soft combining until DRC transmitted during a plurality of slots is completely received. Thus, the controller 201 determines in step 600 whether a current slot corresponds to a reception of new DRC. If it is determined in step 600 that the current slot corresponds to the reception of new DRC, the controller 201 initializes a soft combining buffer storing previously received contents in step 602. If it is determined in step 600 that the current slot does not correspond to the reception of new DRC, the controller 201 proceeds to step 604. Here, if new DRC has been received from a terminal due to the DRC change, since the soft combining buffer has been initialized in step 602, only a control channel is received from the terminal in step 604. The controller 201 receives a rate control channel transmitted from the terminal and performs soft combining between the received signal and a signal stored in the soft combining buffer in step 604, and tries to detect transmitted DRC information using a sector cover in step 606.

The controller 201 determines in step 608 whether DRC has been detected using the sector cover. If it is determined in step 608 that the DRC has been detected using the sector cover, it is determined that a data rate value has been detected from the Table 1. Thus, the controller 201 determines a data rate according to the received DRC from the sector cover DRC table in step 610.

If it is determined in step 608 that the DRC has not been detected using the sector cover, the controller 201 determines in step 620 whether at least one packet has been transmitted to the terminal. If it is determined in step 620 that any one packet has not been transmitted to the terminal, the controller 201 ends this DRC receiving process. If it is determined in step 620 that at least one packet has been transmitted to the terminal, the controller 201 tries to detect the transmitted DRC information using a high rate cover in step 622. The controller 201 determines in step 624 whether the DRC has been detected. If it is determined in step 624 that the DRC has been detected, the controller 201 detects a transmission format requested by the terminal by searching for the DRC value from the high rate DRC table or a high data rate portion in step 626 and then ends this process. If it is determined in step 624 that the DRC has not been detected using the high rate cover, the controller 201 ends the DRC receiving process of the current slot.

As described previously, the exemplary embodiments of FIGs. 5 and 6 are for the controller 211 of the terminal 210 and the controller 201 of the AN 200 to solve the problem occurring when DRC information transmitted from the terminal 210 has been lost during a handoff process. In another preferred exemplary embodiment of the present invention, it can be configured to limit transmission/reception of DRC using the high rate cover for a predetermined time after a handoff is performed. The predetermined time may be determined by experiments or standard regulations specified to a communication system.

As described above, according to the exemplary embodiments of the present invention, forward rate control information can be extended without changing a DRC value provided by a 1xEVDO system. A reverse interference can also be reduced using the extended forward rate control information.

Exemplary embodiments of the present invention can also be embodied as computer-readable codes on a computer-readable recording medium. The computer-readable recording medium is any data storage device that can store data which can thereafter be read by a computer system. Examples of the computer-readable recording medium include, but are not limited to, read-only memory (ROM), random-access memory (RAM), CD-ROMs, magnetic tapes, floppy disks, optical data storage devices, and carrier waves (such as data transmission through the Internet via wired or wireless transmission paths). The computer-readable recording medium can also be distributed over network-coupled computer systems so that the computer-readable code is stored and executed in a distributed fashion. Also, functional programs, codes, and code segments for accomplishing the present invention can be easily construed as within the scope of the invention by programmers skilled in the art to which the present invention pertains.

While certain exemplary embodiments of the invention has have been shown and described hereinwith reference to a certain preferred embodiments thereof, it will be understood by those skilled in the art that various changes in form and details may be made therein without departing from the spirit and scope of the invention as defined by the appended claims and their equivalents.

## Claims

1. A method of transmitting forward rate control information in a mobile communication system in which an Access Node (AN) provides a sector cover corresponding to each of active sectors for a terminal and a high rate control cover, which is common to all sectors, used to direct a high data rate, the method comprising
determining a forward rate through a servicing sector at a transmission time of forward rate control information; and
if the determined forward rate is greater than a predetermined rate, transmitting the forward rate control information through a forward rate control channel using the high rate control cover.

2. The method of claim 1, wherein the determining a forward rate comprises determining the forward rate based on the intensity of a pilot received from each sector.

3. The method of claim 1, further comprising, if the determined forward rate is equal to or less than the predetermined rate, transmitting the forward rate control information through the forward rate control channel using the sector cover.

4. The method of claim 1, further comprising:
determining whether a handoff is required at the transmission time of forward rate control information;
if it is determined that the handoff is required, determining whether forward data can be simultaneously transmitted from another sector; and
if it is determined that forward data can be simultaneously transmitted from another sector, setting a cover previously set to prevent the forward transmission as a rate cover and transmitting a data rate through the forward rate control channel.

5. The method of claim 1, further comprising:
determining whether a handoff is required at the transmission time of forward rate control information;
if it is determined that the handoff is required, determining whether forward data can be simultaneously transmitted from another sector;
if it is determined that forward data cannot be simultaneously transmitted from another sector, setting a sector cover received from a target sector; and
determining a forward rate of the target sector and transmitting the determined forward rate control information through the forward rate control channel using the set sector cover.

6. The method of claim 1, further comprising:
if the transmission time of forward rate control information is after a handoff has been completed, determining whether a predetermined number of packets have been received from the AN;
if it is determined that the predetermined number of packets have been received, determining a data rate from all forward receivable data rates; and
transmitting the determined data rate through the forward rate control channel using a rate cover corresponding to the determined data rate.

7. The method of claim 6, further comprising:
if it is determined that the predetermined number of packets have not been received, determining a data rate from data rates lower than the predetermined data rate; and
transmitting the determined data rate through the forward rate control channel using a rate cover of a sector to which the handoff is completed.

8. An apparatus for transmitting forward rate control information in a mobile communication system in which an Access Node (AN) provides a sector cover corresponding to each of active sectors of a terminal and a high rate control cover, which is common to all sectors, used to direct a high data rate, the apparatus comprising:
a controller for determining a forward rate to be requested to the AN at a transmission time of the forward rate control information, determining whether the determined forward rate is greater than a predetermined data rate, performing control to use the high rate control cover if it is determined that the determined rate is greater than the predetermined data rate, and performing control to use the sector cover if it is determined that the determined rate is equal to or less than the predetermined data rate; and
a transmitter for transmitting the determined data rate value using one of the high rate control cover and sector cover.

9. The apparatus of claim 8, wherein the controller determines whether a handoff is required at the transmission time of forward rate control information, determines whether forward data can be simultaneously transmitted from another sector if it is determined that the handoff is required, and sets a cover previously set to prevent the forward transmission as a rate cover if it is determined that forward data can be simultaneously transmitted from another sector.

10. The apparatus of claim 8, wherein the controller determines whether a handoff is required at the transmission time of forward rate control information, determines whether forward data can be simultaneously transmitted from another sector if it is determined that the handoff is required, sets a sector cover received from a target sector if it is determined that forward data cannot be simultaneously transmitted from another sector, and determines a forward rate of the target sector and transmits the determined forward rate control information through the forward rate control channel using the set sector cover.

11. The apparatus of claim 8, wherein the controller determines whether a handoff is performed at the transmission time of forward rate control information, determines whether a predetermined number of packets have been received from the AN if the handoff is completed, assigns the high rate control cover only if it is determined that the predetermined number of packets have been received, and performs control to use the high rate control cover.

12. The apparatus of claim 11, wherein the controller determines a data rate from data rates lower than the predetermined data rate if it is determined that the predetermined number of packets have not been received, and transmits the determined data rate through the forward rate control channel using a rate cover of a sector to which the handoff is completed.

13. A method of receiving forward rate control information in a mobile communication system having Access Nodes (ANs), which determines a forward rate by receiving the forward rate control information from a terminal and transmits forward traffic at the determined forward rate, the method comprising:
determining whether rate control information received from the terminal at a transmission time of forward rate control information is detected using a sector cover;
if it is determined that the rate control information is detected using the sector cover, determining forward rate control information from a first data rate table;
if it is determined that the rate control information is not detected using the sector cover, detecting the rate control information using a common cover; and
if the rate control information is detected using the common cover, determining a data rate from a second rate table.

14. The method of claim 13, wherein the common cover is used for all of the sectors

15. The method of claim 13, further comprising:
if the terminal, which has transmitted the forward rate control information, has completed a handoff, determining whether a predetermined number of packets have been transmitted to the terminal;
detecting the forward rate control information using the common cover only if it is determined that the predetermined number of packets have been transmitted; and
if it is determined that the predetermined number of packets have not been transmitted, detecting the forward rate control information using the sector cover.

16. The method of claim 13, wherein the first data rate table is a table having data rates equal to or lower than a select data rate, and the second data rate table is a table having data rates greater than the select data rate.

17. An apparatus for receiving forward rate control information in a mobile communication system having Access Nodes (ANs), which determines a forward rate by receiving the forward rate control information from a terminal and transmits forward traffic at the determined forward rate, the apparatus comprising:
a Radio Frequency (RF) module for receiving forward rate control information; and
a controller for determining whether rate control information received from the terminal at a reception time of the forward rate control information is detected using a sector cover and detecting the rate control information using a common cover if it is determined that the rate control information is not detected using the sector cover.

18. The apparatus of claim 17, wherein the controller determines a forward rate using a first data rate table if the forward rate control information is detected using the sector cover, and determines a forward rate using a second data rate table if the forward rate control information is detected using the common cover.

19. The apparatus of claim 18, wherein the first data rate table is a table having data rates equal to or lower than a select data rate, and the second data rate table is a table having data rates greater than the select data rate.

20. The apparatus of claim 17, wherein the controller determines whether a predetermined number of packets have been transmitted to the terminal, if the terminal, which has transmitted the forward rate control information, has completed a handoff, and detects the forward rate control information using the common cover only if it is determined that the predetermined number of packets have been transmitted.

21. A computer-readable medium having embodied thereon a computer program for a method of transmitting forward rate control information in a mobile communication system in which an Access Node (AN) provides a sector cover corresponding to each of active sectors for a terminal and a high rate control cover, which is common to all sectors, used to direct a high data rate, the method comprising:
determining a forward rate through a servicing sector at a transmission time of forward rate control information; and
if the determined forward rate is greater than a predetermined rate, transmitting the forward rate control information through a forward rate control channel using the high rate control cover.

22. A computer-readable medium having embodied thereon a computer program for a method of receiving forward rate control information in a mobile communication system having Access Nodes (ANs), which determines a forward rate by receiving the forward rate control information from a terminal and transmits forward traffic at the determined forward rate, the method comprising:
determining whether rate control information received from the terminal at a transmission time of forward rate control information is detected using a sector cover;
if it is determined that the rate control information is detected using the sector cover, determining forward rate control information from a first data rate table;
if it is determined that the rate control information is not detected using the sector cover, detecting the rate control information using a common cover; and
if the rate control information is detected using the common cover, determining a data rate from a second rate table.
